# EUROPÄISCHE PATENTANMELDUNG

(11) **EP 4 382 437 A1**
(43) Veröffentlichungstag der Anmeldung: **12.06.2024**
(21) Anmeldenummer: 23210674.0
(22) Anmeldetag: 17.11.2023
(51) Int. Cl.: B65B 5/10, B65B 35/24, B65B 43/52, B65B 43/56, B65G 47/88, B65G 47/29

(54) **BELADEEINRICHTUNG MIT EINER PORTIONIEREINHEIT UND BETRIEBSVERFAHREN**

(30) Priorität: 18.11.2022 DE 102022130581
(71) Anmelder: VEMAG Maschinenbau GmbH, 27283 Verden/Aller (DE)
(72) Erfinder: Streu, Nico, 27367 Ahausen (DE); Horn, Marco, 29664 Walsrode (DE); Warnke, Achim, 28857 Syke (DE); Flammann, Uwe, 27308 Kirchlinteln (DE)
(74) Vertreter: Eisenführ Speiser

(57) **Zusammenfassung**

Die Erfindung betrifft eine Beladeeinrichtung 1 zum Portionieren von Lebensmittelprodukten 3 in Schalen 5.1, 5.2, 5.3, 5.4, mit einem Zuführband 2 zum Aufnehmen und Transportieren von Lebensmittelprodukten 3 in einen Übergabebereich 8; einem Transportband 4 zum Transportieren der Schalen 5.1, 5.2, 5.3, 5.4 in Transportrichtung T in einen Beladebereich 9 unterhalb des Übergabebereichs 8; und einer Portioniereinheit 10 zum Portionieren der Lebensmittelprodukte 3 in den Schalen 5.1, 5.2, 5.3, 5.4. Die Portioniereinheit 10 weist einen ersten und einen zweiten Hemmmechanismus 11.1, 11.2 auf, die dazu eingerichtet sind, zum sequenziellen in Kontakt kommen mit einer in den Beladebereich 9 bewegten Schale 5.1, 5.2, 5.3, 5.4 jeweils parallel zur Transportrichtung T und orthogonal zur Transportrichtung T angetrieben zu werden, derart, dass die Bewegung der Schale an mindestens einer Position P1, P2 im Beladebereich 9 gehemmt wird. Die Erfindung betrifft ferner eine Portioniereinheit 10 und ein Verfahren zum Betreiben einer Beladeeinrichtung 1.

## Beschreibung

Die Erfindung betrifft eine Beladeeinrichtung zum Ablegen von Lebensmittelprodukten in Schalen mit einem Zuführband, welches zum Aufnehmen von Lebensmittelprodukten und Transportieren der Lebensmittelprodukte in einen Übergabebereich eingerichtet ist, einem Transportband, welches zum Bewegen von Schalen in einer Transportrichtung und zum Transportieren der Schalen in einen Beladebereich unterhalb des Übergangsbereichs ausgebildet ist. Das Zuführband ist dabei zum Übergeben der Lebensmittelprodukte im Übergabebereich an die Schalen im Beladebereich ausgebildet. Die Beladeeinrichtung umfasst ferner eine Portioniereinheit, die zum selektiven Unterbrechen der Bewegung der Schalen im Beladebereich ausgebildet ist.

Beladeeinrichtungen der eingangs genannten Art sind allgemein bekannt. Sie werden in der Lebensmittelproduktion zum Ablegen bzw. Positionieren von Lebensmittelprodukten in Schalen eingesetzt. Die Schalen nehmen die Lebensmittelprodukte dabei auf, während sie in bzw. durch einen Übergabebereich bewegt werden. Zum kontrollierten Übergeben der Lebensmittelprodukte im Übergabebereich an die Schalen wird die Bewegung der Schalen gehemmt, also kurzzeitig unterbrochen bzw. verlangsamt. Somit wird sichergestellt, dass die Schalen an einer definierten Position verweilen.

Mit dem Ziel zwei oder mehr Portionen eines Lebensmittelproduktes in einer Schale kontrolliert ablegen zu können, besteht der Bedarf die Schale an zwei oder mehr vordefinierten Positionen kontrolliert zu verlangsamen bzw. zu stoppen. In diesem Zusammenhang sind bereits Portioniereinheiten bekannt, die die Bewegung der Schalen an einer vordefinierten Position kurzzeitig unterbrechen. Die Größe der Schalen und die Anzahl der kontrolliert ablegbaren bzw. portionierbaren Lebensmittelprodukte ist allerdings weiterhin limitiert.

Es besteht daher der Bedarf nach einer Portioniereinrichtung, die ein Ablegen einer variablen Anzahl von Lebensmittelprodukten in Schalen unterschiedlicher Abmaße ermöglicht.

Aufgabe der vorliegenden Erfindung ist es daher bei einer Beladeeinrichtung der eingangs genannten Art die Flexibilität hinsichtlich der Anzahl der in einer Schale aufzunehmenden Portionen sowie der Geometrie der Schalen zu erhöhen.

Die Erfindung löst die eingangs genannte Aufgabe in einem ersten Aspekt durch eine Beladeeinrichtung nach Anspruch 1. Die Erfindung schlägt vor, dass die Portioniereinheit einen ersten Hemmmechanismus und einen zweiten Hemmmechanismus aufweist, die dazu eingerichtet sind, zum sequenziellen in Kontakt kommen mit einer in den Beladebereich bewegten Schale jeweils parallel zur Transportrichtung und orthogonal zur Transportrichtung angetrieben zu werden, derart, dass die Bewegung der Schale an mindestens einer Position im Beladebereich gehemmt wird. Dadurch, dass der erste und zweite Hemmmechanismus parallel zur Transportrichtung - also in Transportrichtung und entgegengesetzt dazu - antreibbar sind, können die Hemmmechanismen in Abhängigkeit der Geometrie der Schale und der Anzahl der Portionen an verschiedene Positionen parallel zur Transportrichtung bewegt werden. Dadurch, dass der erste Hemmmechanismus und der zweite Hemmmechanismus ferner orthogonal zur Transportrichtung angetrieben werden, können diese sich somit in den Transportweg der Schalen hinein bewegen derart, dass sie an mindestens einer Position sequenziell mit den Schalen im Beladebereich in Kontakt kommen. Durch dieses in Kontakt kommen wird die Bewegung der Schalen an mindestens einer Position im Beladebereich gehemmt. Unter einem Hemmen der Bewegung ist vorliegend zu verstehen, dass dem Lauf bzw. der Bewegung der Schalen ein Widerstand entgegengesetzt wird und die Schalen dadurch verlangsamt oder bis zum Stillstand gebremst werden. Die Portioniereinheit ist somit nicht länger hinsichtlich der Positionen, an welchen die Bewegung der Schalen unterbrochen wird, limitiert, sondern ermöglicht eine flexible Positionierung der Lebensmittelprodukte. Durch die parallel zur Transportrichtung bewegbaren Hemmmechanismen ist somit auch ein Bewegen der Schalen entgegen der Transportrichtung ermöglicht, sodass beispielsweise zwei Lebensmittelprodukte übereinander abgelegt werden können.

Im Sinne der Erfindung ist unter einer Schale ein Aufnahmemittel jeglicher Art zu verstehen, welche insbesondere auch Tablets oder Platten umfassen, die geeignet sind, auf einem entsprechenden Transportband transportiert zu werden und mit einem Lebensmittelprodukt beladen zu werden.

Vorzugsweise ist das Transportband zum Transportieren der Schalen in einer Transportebene eingerichtet, wobei die Portioniereinheit unterhalb der Transportebene angeordnet ist. Weiter bevorzugt sind der erste Hemmmechanismus und der zweite Hemmmechanismus dazu eingerichtet, zum selektiven Bewegen in die Transportebene orthogonal zur Transportrichtung angetrieben zu werden. Mit anderen Worten bewegen der erste Hemmmechanismus und der zweite Hemmmechanismus sich von einer Position unterhalb der Transportebene, in welcher die Schalen transportiert werden, in die Transportebene hinein und kommen somit mit einer durch den Beladebereich bewegten Schale in Kontakt. Durch dieses in Kontakt kommen wird die Bewegung der Schalen entsprechend gehemmt. Die Anordnung der Portioniereinheit unterhalb der Transportebene ermöglicht die Nutzung von Schalen verschiedener Geometrien, ohne dass beispielsweise die Breite der Schalen durch die Anordnung der Portioniereinheit eingeschränkt wäre.

Weiter bevorzugt weist die Portioniereinheit mindestens einen Antrieb auf, der zum Antreiben des ersten Hemmmechanismus und/oder des zweiten Hemmmechanismus parallel zur Transportrichtung eingerichtet ist. Ein Antrieb ermöglicht gegenüber einem bloßen Rückstellelement, wie beispielsweise einem Federmechanismus, ein gesteuertes Bewegen - also ein Antreiben - des ersten Hemmmechanismus und/oder des zweiten Hemmmechanismus. Vorzugsweise ist der Antrieb dabei ein erster Antrieb, der zum Antreiben des ersten Hemmmechanismus eingerichtet ist, und die Portioniereinrichtung weist ferner einen zweiten Antrieb auf, der zum Antreiben des zweiten Hemmmechanismus parallel zur Transportrichtung eingerichtet ist. Somit sind der erste Hemmmechanismus und der zweite Hemmmechanismus unabhängig voneinander antreibbar.

Weiter bevorzugt weist der Antrieb einen Motor und einen mit dem Motor kooperierendes stufenloses Getriebe auf. Ein stufenloses Getriebe ermöglicht eine flexible Steuerung der Positionierung des ersten Hemmmechanismus und/oder des zweiten Hemmmechanismus und somit ein flexibles und bedarfsgerechtes Hemmen der Bewegung der Schalen im Beladebereich. Somit ist ein exakteres Ablegen bzw. Portionieren der Lebensmittelprodukte in den Schalen durch entsprechendes stufenloses Hemmen der Bewegung der Schalen mittels der Hemmmechanismen möglich.

Vorzugsweise umfasst das stufenlose Getriebe einen mit dem Motor kooperierenden Zahnradantrieb zum Antreiben einer mit dem ersten Hemmmechanismus und/oder dem zweiten Hemmmechanismus wirkverbundenen Gewindespindel. Eine Gewindespindel, die mit einem Zahnradantrieb kooperiert, ermöglicht die Übersetzung einer Rotationsbewegung des Zahnrades in eine Linearbewegung der Gewindespindel bzw. eines mit der Gewindespindel in Eingriff stehenden Hemmmechanismus.

Vorzugsweise ist die Gewindespindel eine erste Gewindespindel und mit dem ersten Hemmmechanismus in Eingriff und die Portioniereinheit umfasst ferner eine zweite Gewindespindel, die mit dem zweiten Hemmmechanismus in Eingriff ist, wobei der Zahnradantrieb dazu ausgebildet ist, die erste Gewindespindel und die zweite Gewindespindel gegenläufig anzutreiben. Somit kann ein einziger Motor zum Antrieb des Zahnradantriebs verwendet werden. Der Zahnradantrieb steht dabei derart mit der ersten Gewindespindel und der zweiten Gewindespindel in Eingriff, dass diese gegenläufig angetrieben werden. Somit ist es möglich, dass der erste Hemmmechanismus und der zweite Hemmmechanismus jeweils im Wechsel mit einer sich in den Beladebereich bewegenden Schalen in Eingriff kommen. Somit kann der erste Hemmmechanismus beispielsweise an einer ersten, zweiten und dritten Position mit einer sich in dem Beladebereich bewegenden ersten Schale in Eingriff kommen, und bewegt sich anschließend entgegen der Transportrichtung zurück zur ersten Position, während der gegenläufig angetriebene zweite Hemmmechanismus nun in Transportrichtung bewegt wird und an der ersten, zweiten Position und dritten Position mit einer zweiten Schale in Eingriff kommt. Wird der zweite Hemmmechanismus anschließend entgegen der Transportrichtung zurück zur ersten Position bewegt, kann währenddessen der erste Hemmmechanismus von der ersten Position bis hin zur dritten Position in Transportrichtung bewegt werden und an den entsprechenden Positionen dann mit einer dritten Schale in Kontakt kommen.

Gemäß einer bevorzugten Alternative umfasst das stufenlose Getriebe einen mit dem ersten Hemmmechanismus und/oder dem zweiten Hemmmechanismus wirkverbundenen Zahnriemenantrieb. Ein Zahnriemenantrieb ermöglicht eine stufenlose Steuerung der Position des ersten Hemmmechanismus und/oder des zweiten Hemmmechanismus, die mit dem entsprechenden Zahnriemen wirkverbunden sind.

Weiter bevorzugt weist die Portioniereinheit mindestens eine Hubeinheit auf, die zum Antreiben des ersten Hemmmechanismus und/oder des zweiten Hemmmechanismus orthogonal zur Transportrichtung eingerichtet ist. Die Portioniereinheit ist dabei derart angeordnet, dass der erste Hemmmechanismus und/oder der zweite Hemmmechanismus beispielsweise seitlich quer zur Transportrichtung in den Transportweg einer Schale bewegt werden. Alternativ oder ergänzend ist zumindest ein Hemmmechanismus unterhalb der Transportebene bzw. oberhalb der Transportebene angeordnet und wird somit in vertikaler Richtung in den Transportweg der Schalen bewegt. Eine Hubeinheit ermöglicht dabei eine kurze lineare Bewegung des Hemmmechanismus zum in Kontakt bringen mit den jeweiligen Schalen. Eine solche Hubeinheit, die zum Aufbringen einer Kraft auf den ersten Hemmmechanismus und/oder den zweiten Hemmmechanismus zum Ausführen einer Linearbewegung eingerichtet ist, kann konstruktiv einfach gestaltet werden.

Vorzugsweise ist die Hubeinheit dabei eine erste Hubeinheit, die zum Antreiben des ersten Hemmmechanismus eingerichtet ist, und die Portioniereinheit weist ferner eine zweite Hubeinheit auf, die zum Antreiben des zweiten Hemmmechanismus orthogonal zur Transportrichtung eingerichtet ist. Durch zwei unabhängige Hubeinheiten, die jeweils dem ersten Hemmmechanismus bzw. dem zweiten Hemmmechanismus zugeordnet sind, können die Hemmmechanismen räumlich beabstandet voneinander angeordnet werden, sodass die Beladeeinrichtungen insbesondere die Portioniereinheit flexibler gestaltet werden kann. Auch die Steuerung des Hubs des ersten Hemmmechanismus bzw. des zweiten Hemmmechanismus unabhängig voneinander ermöglicht eine größere Flexibilität.

Weiter bevorzugt weist die Hubeinheit einen Aktuator auf, insbesondere einen Pneumatik-Zylinder, wobei der erste Hemmmechanismus und/oder der zweite Hemmmechanismus ferner einen mit dem Aktuator kooperierenden Stößel aufweisen, welcher durch den Aktuator orthogonal zur Transportrichtung, insbesondere in die Transportebene, bewegbar ist. Ein solcher Aktuator und einen mit dem Aktuator kooperierender Stößel ermöglicht auf einfache Weise das Ausbringen einer Hubbewegung, welche ein in Kontakt bringen des Hemmmechanismus und insbesondere des jeweiligen Stößels des entsprechenden Hemmmechanismus mit den Schalen zulässt.

Es ist weiterhin bevorzugt, dass die Beladeeinrichtung ferner eine mit der Portioniereinheit steuerungstechnisch verbundene Steuereinrichtung aufweist, die dazu eingerichtet ist, die Bewegung des ersten Hemmmechanismus und des zweiten Hemmmechanismus parallel zur Transportrichtung und/oder orthogonal zur Transportrichtung zu steuern. Somit ist eine Steuerung des ersten Hemmmechanismus und/oder des zweiten Hemmmechanismus sowohl in Transportrichtung als auch orthogonal zur Transportrichtung abgestimmt aufeinander möglich. Vorzugsweise ist die Steuereinrichtung ferner zum Steuern des Zuführbandes und/oder des Transportbandes eingerichtet. Somit kann die Steuerung des Zuführbandes und/oder des Transportbandes abgestimmt auf die Steuerung des ersten Hemmmechanismus und/oder des zweiten Hemmmechanismus erfolgen. Die Präzision des Portionierens bzw. Ablegens der Lebensmittelprodukte in den Schalen wird somit erhöht. Die Steuereinrichtung ist somit bevorzugt eine zentrale Steuerung.

Weiter bevorzugt umfasst die Beladeeinrichtung ferner mindestens einen mit der Steuereinrichtung verbundenen Sensor, der zum Erfassen einer sich in den Beladebereich bewegenden Schale eingerichtet ist. Somit kann die Steuerung des Hemmmechanismus abgestimmt auf die exakte Position der Schalen im Beladebereich erfolgen, wobei die Bewegung durch den Sensor erfasst wird. Insbesondere die Bewegung des ersten Hemmmechanismus und/oder des zweiten Hemmmechanismus orthogonal zur Transportrichtung, welche zu dem eigentlichen in Kontakt bringen mit den Schalen führt, kann somit gezielt erfolgen und die Transportgeschwindigkeit der Beladeeinrichtung insgesamt durch die präzisere Steuerung erhöht werden. Bevorzugt ist der Sensor zum Erfassen der sich in den Beladebereich bewegenden Schale durch Detektieren eines Abstands zwischen zwei benachbarten Schalen im Beladebereich eingerichtet.

Es ist weiter bevorzugt, dass die Steuerung dazu ausgebildet ist, den ersten Hemmmechanismus und den zweiten Hemmmechanismus abhängig von der Anzahl der zu portionierenden Lebensmittelprodukte in einem, mehreren oder sämtlichen der folgenden Betriebsmodi zu betreiben:
- in einem ersten Betriebsmodus, in dem der erste Hemmmechanismus die Bewegung einer in den Beladebereich bewegten Schale an einer ersten Position zum Aufnehmen eines Lebensmittelproduktes unterbricht und/oder hemmt, für den Fall, dass ein Lebensmittelprodukt in der Schale zu portionieren ist;
- in einem zweiten Betriebsmodus, in dem der erste Hemmmechanismus die Bewegung einer ersten Schale an einer ersten Position zum Aufnehmen eines ersten Lebensmittelproduktes und der zweite Hemmmechanismus die Bewegung der ersten Schale an einer zweiten Position zum Aufnehmen eines zweiten Lebensmittelproduktes unterbricht und/oder hemmt, für den Fall, dass zwei Lebensmittelprodukte in der Schale zu portionieren sind;
- in einem dritten Betriebsmodus, in dem der erste Hemmmechanismus in einer vordefinierten Anzahl von Takten die Bewegung einer ersten Schale an einer Anzahl von Position zum Aufnehmen einer korrespondierenden Anzahl von Lebensmittelprodukten unterbricht und/oder hemmt und der zweite Hemmmechanismus in einer vordefinierten Anzahl von Takten die Bewegung einer zweiten Schale an einer Anzahl von Position zum Aufnehmen einer korrespondierenden Anzahl von Lebensmittelprodukten unterbricht und/oder hemmt, für den Fall, dass eine Mehrzahl von Lebensmittelprodukten in der Schale zu portionieren ist; und
- in einem vierten Betriebsmodus, in dem der erste Hemmmechanismus in einer vordefinierten Geschwindigkeit in Transportrichtung bewegt wird, die langsamer ist als eine Transportgeschwindigkeit des Transportbandes, und die Bewegung einer in den Beladebereich bewegten Schale kontinuierlich hemmt, derart, dass eine Mehrzahl von Lebensmittelprodukten in der Schale aufgenommen wird.

Die Portioniereinrichtung ermöglicht somit eine gezielte Steuerung des ersten Hemmmechanismus und des zweiten Hemmmechanismus beispielsweise zum Portionieren von langen strangförmigen Lebensmittelprodukten bzw. von einer Vielzahl von Portionen in einem engen Abstand zueinander, für welche sich jeweils der vierte Betriebsmodus eignet oder zum Portionieren von Lebensmittelprodukten mit zwei oder mehr beabstandeten Portionen in einer Schale, für welche sich im besonderen Maße der dritte Betriebsmodus eignet. Auch ist weiterhin das Portionieren von nur einer Portion ermöglicht, für welche sich ein Betrieb im ersten Betriebsmodus eignet.

Vorzugsweise umfasst das Transportband einen ersten Bandabschnitt und einen zweiten Bandabschnitt, der von dem ersten Bandabschnitt in der Transportebene orthogonal zur Transportrichtung beabstandet ist, wobei die Portioniereinheit zumindest abschnittsweise zwischen dem ersten Bandabschnitt und dem zweiten Bandabschnitt angeordnet ist. Der erste Bandabschnitt und der zweite Bandabschnitt verlaufen dabei parallel zueinander. Durch die Anordnung der Portioniereinheit, insbesondere des ersten und zweiten Hemmechanismus, zwischen dem ersten Bandabschnitt und dem zweiten Bandabschnitt, wird die Bewegung des Transportbandes durch die Portioniereinheit nicht behindert, gleichzeitig können die Hemmmechanismen aber mit den Schalen ungehindert in Kontakt kommen.

Die Erfindung löst die eingangs genannte Aufgabe in einem zweiten Aspekt durch eine Portioniereinheit für eine Beladeeinrichtung zum Portionieren von Lebensmittelprodukten in Schalen, insbesondere für eine Beladeeinrichtung gemäß dem ersten Aspekt der Erfindung. Die Portioniereinheit gemäß dem zweiten Aspekt der Erfindung ist zum Portionieren von Lebensmittelprodukten in Schalen in einem Beladebereich ausgebildet. Die Portioniereinheit löst die eingangs genannte Aufgabe dadurch, dass die Portioniereinheit einen ersten Hemmmechanismus und einen zweiten Hemmmechanismus aufweist, die dazu eingerichtet sind, zum sequenziellen in Kontakt kommen mit einer in den Beladebereich bewegten Schale jeweils parallel zur Transportrichtung und orthogonal zur Transportrichtung angetrieben zu werden, derart, dass die Bewegung der Schale an mindestens einer Position im Beladebereich gehemmt wird. Eine Portioniereinheit gemäß dem zweiten Aspekt der Erfindung macht sich die eingangs in Bezug auf den ersten Aspekt der Erfindung genannten Vorteile zu eigen. Vorteile und bevorzugte Ausführungsbeispiele der Portioniereinheit für eine Beladeeinrichtung gemäß dem ersten Aspekt der Erfindung sind ebenso Vorteile und bevorzugte Ausführungsbeispiele der Portioniereinheit gemäß dem zweiten Aspekt der Erfindung.

Die Erfindung betrifft in einem dritten Aspekt ein Verfahren zum Betreiben einer Beladeeinrichtung zum Portionieren von Lebensmittelprodukten in Schalen, insbesondere zum Betreiben einer Beladeeinrichtung gemäß dem ersten Aspekt der Erfindung. Das Verfahren gemäß dem dritten Aspekt löst die eingangs genannte Aufgabe dadurch, dass es die Schritte umfasst:
- Aufnehmen von Lebensmittelprodukte auf einem Zuführband;
- Transportieren der Lebensmittelprodukte in einen Übergabebereich;
- Antreiben eines Transportbands in einer Transportrichtung zum Aufnehmen von Schalen;
- Bewegen der Schalen in einen Beladebereich durch das Transportband, der unterhalb des Übergabebereich angeordnet ist, wobei die Lebensmittelprodukte im Übergabebereich an die durch das Transportband transportierten Schalen übergeben werden; und
- selektives Hemmen der Bewegung jeweils einer in den Beladebereich bewegten Schale durch in Kontakt bringen eines ersten Hemmmechanismus und/oder eines zweiten Hemmmechanismus einer Portioniereinheit mit der Schale, derart, dass die Bewegung der Schale an mindestens einer Position im Beladebereich gehemmt wird, wobei der erste Hemmmechanismus und der zweite Hemmmechanismus jeweils parallel zur Transportrichtung und orthogonal zur Transportrichtung antreibbar sind, wobei die Schale beim Unterbrechen der Bewegung ein Lebensmittelprodukt aufnimmt.

Durch das selektive Hemmen der Bewegung einer jeweils einer in den Beladebereich bewegten Schale durch in Kontakt bringen eines ersten Hemmmechanismus und eines zweiten Hemmmechanismus, macht sich das Verfahren die eingangs in Bezug auf den ersten Aspekt der Erfindung genannten Vorteile zu eigen. Ausführungsbeispiele und Vorteile, die in Bezug auf den ersten Aspekt der Erfindung genannt wurden, sind folglich ebenso Vorteile und bevorzugte Ausführungsbeispiele des Verfahrens gemäß dem dritten Aspekt der Erfindung und umgekehrt.

Das Verfahren umfasst vorzugsweise ferner das Betreiben des ersten Hemmmechanismus und des zweiten Hemmmechanismus abhängig von der Anzahl zu produzierender Lebensmittelprodukte in einem, mehreren oder sämtlichen der folgenden Betriebsmodi:
- in einem ersten Betriebsmodus, in dem der erste Hemmmechanismus die Bewegung einer Schale an einer ersten Position zum Aufnehmen eines Lebensmittelproduktes hemmt und/oder unterbricht, für den Fall, dass ein Lebensmittelprodukt in der Schale zu portionieren ist;
- in einem zweiten Betriebsmodus, in dem der erste Hemmmechanismus die Bewegung einer ersten Schale an einer ersten Position zum Aufnehmen eines ersten Lebensmittelproduktes und der zweite Hemmmechanismus die Bewegung der ersten Schale an einer zweiten Position zum Aufnehmen eines zweiten Lebensmittelproduktes hemmt und/oder unterbricht, für den Fall, dass zwei Lebensmittelprodukt in den Schalen zu portionieren sind; in einem dritten Betriebsmodus, in dem der erste Hemmmechanismus in einer vordefinierten Anzahl von Takten die Bewegung einer ersten Schale an einer Anzahl von Position zum Aufnehmen einer korrespondierenden Anzahl von Lebensmittelprodukten hemmt und/oder unterbricht und der zweite Hemmmechanismus in einer vordefinierten Anzahl von Takten die Bewegung einerzweiten Schale an einer Anzahl von Position zum Aufnehmen einer korrespondierenden Anzahl von Lebensmittelprodukten hemmt und/oder unterbricht, für den Fall, dass eine Mehrzahl von Lebensmittelprodukten in der Schale zu portionieren ist; und
- in einem vierten Betriebsmodus, in dem der erste Hemmmechanismus in einer vordefinierten Geschwindigkeit in Transportrichtung bewegt wird, die langsamer ist als eine Transportgeschwindigkeit des Transportbandes, und die Bewegung einer ersten Schale kontinuierlich hemmt, derart, dass eine Mehrzahl von Lebensmittelprodukten in der ersten Schale aufgenommen wird.

Vorzugsweise umfasst das Verfahren ferner das Bewegen der im Beladebereich durch den ersten Hemmmechanismus und/oder den zweiten Hemmmechanismus in der Bewegung gehemmten Schale nach dem Aufnehmen eines ersten Lebensmittelproduktes entgegen der Transportrichtung zum Aufnehmen eines zumindest abschnittsweise auf dem ersten Lebensmittelprodukt abgelegten zweiten Lebensmittelprodukt.

Die Erfindung wird im Folgenden unter Bezugnahme auf die beigefügten Figuren anhand bevorzugter Ausführungsbeispiele beschrieben. Hierbei zeigen:
- FIG. 1:: eine Beladeeinrichtung gemäß einer bevorzugten Ausführungsform;
- FIG. 2:: ein Ausschnitt einer Beladeeinrichtung 1 gemäß FIG. 1;
- FIG. 3:: eine Portioniereinheit für eine Beladeeinrichtung gemäß FIG. 1 und 2 in einer perspektivischen Ansicht;
- FIG. 4:: die Portioniereinheit gemäß FIG. 3 in einer Draufsicht;
- FIG. 5:: eine Hubeinheit für eine Portioniereinheit gemäß FIG. 3 und 4;
- FIG. 6:: ein Flussdiagramm eines Verfahren zum Betreiben einer Beladeeinrichtung gemäß FIG. 1 und 2; und
- FIG. 7:: ein Flussdiagramm von Teilschritten des Verfahrens gemäß FIG. 6.

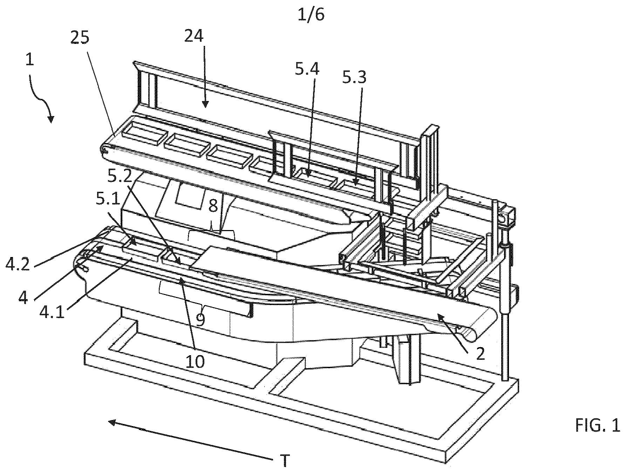

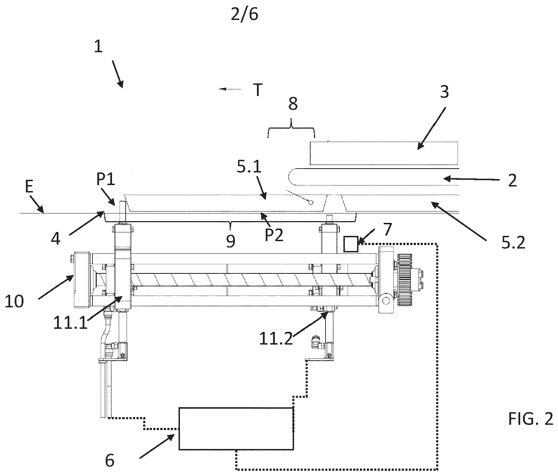

FIG. 1 zeigt eine Beladeeinrichtung 1 mit einem Zuführband 2, welche zum Aufnehmen von Lebensmittelprodukten 3 (nicht gezeigt, vgl. Fig. 2) eingerichtet ist, und einem Transportband 4, welches zum Bewegen in einer Transportrichtung T eingerichtet ist.

Das Transportband 4 umfasst einen ersten Bandabschnitt 4.1 und einen zweiten Bandabschnitt 4.2, die beabstandet voneinander und jeweils zum Bewegen in der Transportrichtung T eingerichtet sind.

Das Zuführband 2 ist zum Transportieren der Lebensmittelprodukte 3 in einen Übergabebereich 8 eingerichtet. In der gezeigten Ansicht werden zunächst eine erste und eine zweite Schale 5.1, 5.2 auf dem Transportband 4 transportiert. Das Transportband 4 ist zum Bewegen von Schalen 5.1, 5.2, 5.3, 5.4 in einen unterhalb des Übergabebereichs 8 angeordneten Beladebereich 9 eingerichtet. Die Schalen 5.1, 5.2, 5.3, 5.4 werden durch das Transportband 4 bevorzugt in einer Transportebene E bewegt.

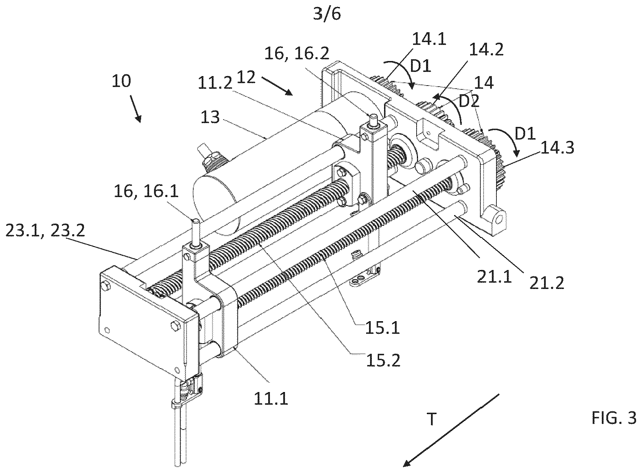

Dem Transportband 4 werden in der gezeigten Ansicht dabei eine dritte und vierte Schale 5.3, 5.4 von einer oberhalb angeordneten Zuführeinrichtung 24 zugeführt, mit einem eigenen Zuführtransportband 25. Die dritte und vierte Schalen 5.3, 5.4, werden von dem Zuführtransportband 25 über die Zuführeinrichtung 24 zu dem Transportband 4 geleitet und gelangen, wie auch die erste und zweite Schale 5.1, 5.2 durch das Transportband 4 derart in den Beladebereich 9 und damit unterhalb des Übergabebereichs 8, dass die Lebensmittelprodukte 3 (nicht gezeigt) im Übergabebereich 8 ein Ende des Zuführbands 2 erreichen. An diesem Ende wird das Zuführband 2 umgelenkt und in Lebensmittelprodukte 3 fallen in die Schalen 5.1, 5.2, 5.3, 5.4 herab. Die Beladeeinrichtung 1 umfasst weiterhin eine Portioniereinheit 10, die zum Portionieren der Lebensmittelprodukte 3 in den Schalen 5.1, 5.2, 5.3, 5.4 im Beladebereich 9 ausgebildet ist. Die Portioniereinheit 10 ist unterhalb der Transportebene E angeordnet und im Detail in Fig. 3 gezeigt. Die Portioniereinheit 10 ist vorzugsweise zumindest abschnittsweise zwischen dem ersten Bandabschnitt 4.1 und dem zweiten Bandabschnitt 4.2 angeordnet, wobei der erste Bandabschnitt 4.1 von dem zweiten Bandabschnitt 4.2 in der Transportebene E orthogonal zur Transportrichtung T beabstandet voneinander sind.

FIG. 2 zeigt einen Ausschnitt einer Beladeeinrichtung 1, wie beispielsweise Fig. 1 gezeigt, mit einem Zuführband 2, welches zum Aufnehmen von Lebensmittelprodukten 3 eingerichtet ist, und einem Transportband 4, welches zum Bewegen von Schalen 5.1, 5.2, 5.3, 5.4 in einer Transportrichtung T eingerichtet ist. Bevorzugt umfasst die Beladeeinrichtung 1 ferner eine Steuereinrichtung 6 und einen mit der Steuereinrichtung 6 signalleitend verbundenen Sensor 7.

Das Zuführband 2 ist zum Transportieren der Lebensmittelprodukte 3 in einem Übergabebereich 8 eingerichtet und das Transportband 4 ist zum Bewegen der Schalen 5.1, 5.2, 5.3, 5.4 in einen unterhalb des Übergabebereichs 8 angeordneten Beladebereich 9 eingerichtet.

Die auf dem Transportband 4 befindlichen Schalen 5.1, 5.2 werden durch das Transportband 4 bevorzugt in einer Transportebene E bewegt, wobei eine Portioniereinheit 10 unterhalb der Transportebene E angeordnet ist. Die Schalen 5.1, 5.2 werden durch das Transportband 4 derart in den Beladebereich 9 und damit unterhalb des Übergabebereichs 8 bewegt, dass die Lebensmittelprodukte 3 im Übergabebereich 8 ein Ende des Zuführbands 2 erreichen, in welchem das Zuführband 2 umgelenkt wird, und in die Schalen 5.1, 5.2 herabfallen. Bei dem Zuführband 2 kann es sich auch um ein sogenanntes Schießband handeln, welches durch eine gesteuerte Bewegung entgegen der Transportrichtung T ein nahezu vertikales Herunterfallen der Lebensmittelprodukte 3 in die auf dem Transportband 4 befindlichen Schalen 5.1, 5.2 ermöglicht. Die Beladeeinrichtung 1 umfasst weiterhin die Portioniereinheit 10, die zum Portionieren der Lebensmittelprodukte 3 in den Schalen 5.1, 5.2, 5.3, 5.4 im Beladebereich 9 ausgebildet ist.

Der Sensor 7 ist bevorzugt zum Erfassen einer sich in den Beladebereich 9 bewegenden Schalen 5.1, 5.2, 5.3, 5.4 ausgebildet. Dabei erfasst der Sensor 7 bevorzugt einen Abstand zwischen der ersten Schale 5.1 und der zu dieser benachbarten zweiten Schale 5.2 im Beladebereich 9. Bei einem solchen Sensor 7 kann es sich beispielsweise um eine Lichtschranke handeln, welche ein in die Lichtschranke eintretendes Objekt detektiert und dementsprechend einen Abstand zwischen zwei benachbarten Schalen 5.1, 5.2 vorhandenen durch das "Nicht-Vorhandensein" eines Objekts in der Lichtschranke. Die Steuerung 6 ist bevorzugt dazu eingerichtet, die Portioniereinheit 10 abhängig von dem Signal des Sensors 7 zu steuern. Ferner steuert die Steuereinrichtung 6 bevorzugt auch das Zuführband 2 und das Transportband 4 derart, dass die Portioniereinheit 10, das Zuführband 2 und das Transportband 4 abgestimmt aufeinander gesteuert werden.

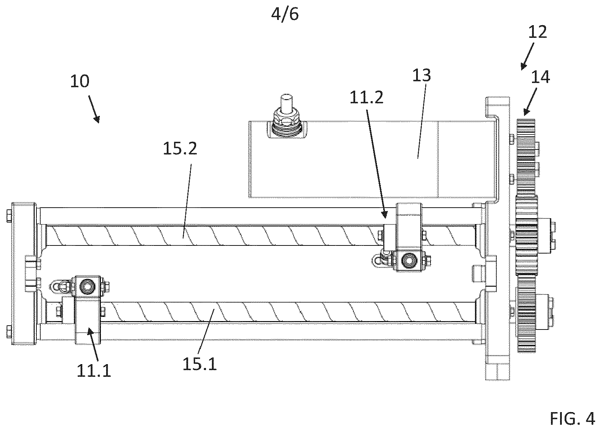

Die Portioniereinheit 10 ist im Detail in FIG. 3 und FIG. 4 gezeigt. Die Portioniereinheit 10 umfasst einen ersten Hemmmechanismus 11.1 und einen zweiten Hemmmechanismus 11.2, die dazu eingerichtet sind, zum sequenziellen in Kontakt kommen mit einer in dem Beladebereichen 9 bewegten Schale 5.1 jeweils parallel zur Transportrichtung T und orthogonal zur Transportrichtung T angetrieben zu werden. Der erste Hemmmechanismus 11.1 und der zweite Hemmmechanismus 11.2 werden dabei derart angetrieben, dass die Bewegung der Schale 5.1 an mindestens einer Position P1 gehemmt wird.

In FIG. 2 ist der erste Hemmmechanismus 11.1 in einer Position gezeigt, in der er durch entsprechendes ansteuern mittels einer Bewegung orthogonal zur Transportrichtung T mit der Schale 5.1 an der ersten Position P1 in Kontakt ist. Die Bewegung der Schale 5.1 an der Position P1 wird somit gehemmt, wobei unter einem Hemmen der Bewegung ein Verlangsamen oder auch ein vollständiges Unterbrechen der Bewegung zu verstehen ist.

Die in FIG. 3 und FIG. 4 im Detail gezeigte Portioniereinheit 10 umfasst ferner einen Antrieb 12, der zum Antreiben des ersten Hemmmechanismus 11.1 und des zweiten Hemmmechanismus 11.2 parallel zur Transportrichtung T eingerichtet ist. Der Antrieb 12 umfasst einen Motor 13 und einen mit dem Motor 13 kooperierendes Getriebe 14.

Das Getriebe 14 ist vorliegend als Zahnradantrieb 14 ausgebildet, der mit dem Motor 13 wirkverbunden ist. Bei dem Motor 13 handelt es sich bevorzugt um einen Servomotor.

Ferner umfasst die Portioniereinheit 10 eine erste Gewindespindel 15.1, die mit dem ersten Hemmmechanismus 11.1 in Eingriff ist und eine zweite Gewindespindel 15.2, die mit dem zweiten Hemmmechanismus 11.2 in Eingriff ist. Die erste Gewindespindel 15.1 und die zweite Gewindespindel 15.2 werden von dem Zahnradantrieb 14 angetrieben und sind dazu ausgebildet, eine durch den Motor 3 bewirkte Rotationsbewegung in eine Linearbewegung des ersten Hemmmechanismus 11.1 und des zweiten Hemmmechanismus 11.2 parallel zur Transportrichtung T zu übersetzen.

Der Zahnradantrieb 14 umfasst ein erstes Zahnrad 14.1, welches mit dem Servomotor 13 wirkverbunden ist, derart, dass das erste Zahnrad 14.1 angetrieben vom Servomotor 13 in einer ersten Drehrichtung D1 rotiert. Der Zahnradantrieb 14 umfasst ferner ein zweites Zahnrad 14.2, welches derart mit dem ersten Zahnrad 14.1 wirkverbunden in Eingriff ist, dass das zweite Zahnrad 14.2 in einer zweiten Drehrichtung D2, entgegengesetzt der ersten Drehrichtung D2, rotiert. Das zweite Zahnrad 14.2 ist mit einem dritten Zahnrad 14.3 derart in Eingriff, dass eine Rotation des zweiten Zahnrades in der zweiten Drehrichtung D2 eine Rotation des dritten Zahnrads 14.3 in der gegenläufigen ersten Drehrichtung D1 bewirkt. Durch die Kopplung der ersten Gewindespindel 15.1 mit dem dritten Zahnrad 14.3 rotiert die erste Gewindespindel 15.1 gemeinsam mit dem dritten Zahnrad 14.3 in der ersten Drehrichtung D1. Durch die Kopplung der zweiten Gewindespindel 15.2 mit dem zweiten Zahnrad 14.2 rotiert die zweite Gewindespindel 15.2 gemeinsam mit dem zweiten Zahnrad in der zweiten Drehrichtung D2 entgegen der ersten Drehrichtung D1. Die erste Gewindespindel 15.1 und die zweite Gewindespindel 15.2 werden durch den Zahnradantrieb 14 somit gegenläufig angetrieben. Eine Bewegung des ersten Hemmmechanismus 11.1 entgegen der Transportrichtung T geht also mit einer Bewegung des zweiten Hemmmechanismus 11.2 in Transportrichtung T einher und umgekehrt. Es soll dabei verstanden werden, dass die erste Drehrichtung D1 und die zweite Drehrichtung D2 abhängig von der Antriebsrichtung des Servomotors 13 auch jeweils entgegengesetzt verlaufen können.

Weiterhin umfasst die Portioniereinheit 10 eine Hubeinheit 16, die zum Antreiben des ersten Hemmmechanismus 11.1 und des zweiten Hemmmechanismus 11.2 orthogonal zur Transportrichtung T eingerichtet ist. In dem gezeigten Ausführungsbeispiel umfasst die Hubeinheit 16 eine erste Hubeinheit 16.1 zum Antreiben des ersten Hemmmechanismus 11.1 orthogonal zur Transportrichtung T und eine zweite Hubeinheit 16.2 zum Antreiben des zweiten Hemmmechanismus 11.2 orthogonal zur Transportrichtung T.

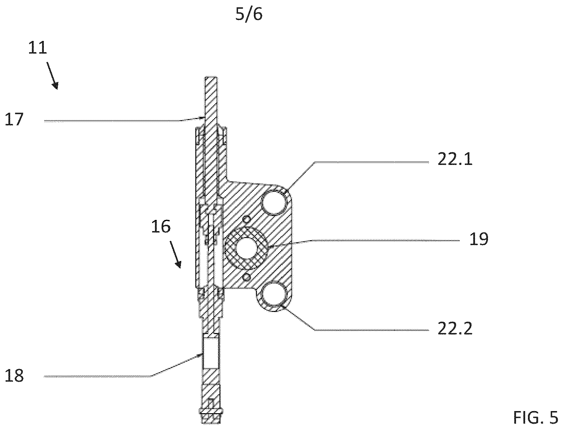

Der Hemmmechanismus 11 mit einer Hubeinheit 16 ist exemplarisch in FIG. 5 im Detail gezeigt. Die Hubeinheit 16 umfasst einen Stößel 17, der dazu eingerichtet ist, mit einer Schale 5.1, 5.2 in Kontakt zu kommen, und einen mit dem Stößel 17 kooperierenden Aktuator 18. Bei dem Aktuator 18 handelt es sich beispielsweise um einen Pneumatik-Zylinder.

Wie insbesondere in FIG. 5 gezeigt, weist der Hemmmechanismus 11 eine Gewindemutter 19 auf, die dazu eingerichtet ist, mit der ersten Gewindespindel 15.1 bzw. der zweiten Gewindespindel 15.2 in Eingriff zu sein. Ferner umfasst der Hemmmechanismus 11 ein paar Gleitbuchsen 22.1, 22.2, die dazu eingerichtet sind, mit einem korrespondierenden paar Gleitführungen 21.1, 21.2 in Eingriff zu sein. Die Gleitführungen 21.1, 21.2 erstrecken sich in Transportrichtung T und sind dazu ausgebildet, die Bewegung des Hemmmechanismus 11 in Transportrichtung zu führen. Entsprechend weist die Portioniereinheit 10 auch ein paar zweite Gleitführungen 23.1, 23.2 zum Führen des zweites Hemmmechanismus 11.2 auf, wobei eine der Gleitführungen 23.2 in der gezeigten Ansicht nicht ersichtlich ist.

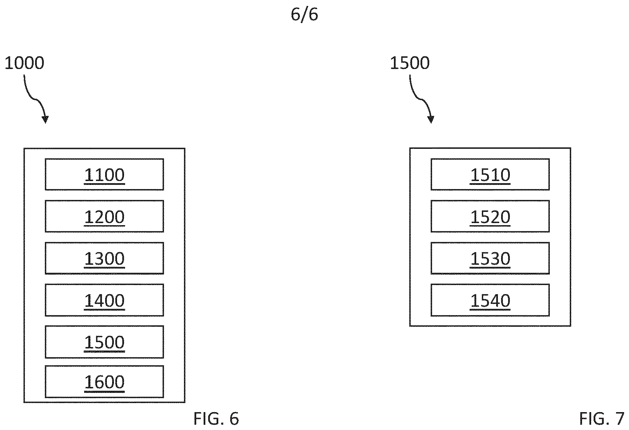

FIG. 6 zeigt ein Verfahren 1000 zum Betreiben einer Beladeeinrichtung 1, wie sie FIG. 1 und FIG. 2 zeigen.

Das Verfahren 1000 umfasst in einem ersten Schritt 1100 das Aufnehmen von Lebensmittelprodukten 3 von einem Zuführband 2.

In einem zweiten Schritt 1200 umfasst das Verfahren 1000 das Transportieren von Lebensmittelprodukten 3 in einem Übergabebereich 8.

In einem dritten Schritt 1300 umfasst das Verfahren 1000 das Antreiben eines Transportbandes 4 in einer Transportrichtung T zum Aufnehmen von Schalen 5.1, 5.2 und in einem vierten Schritt 1400 das Bewegen der Schalen 5.1, 5.2 in einen Beladebereich 9 durch das Transportband 4, wobei der Beladebereich 9 unterhalb des Übergabebereichs 8 angeordnet ist.

Im vierten Schritt 1400 werden die Lebensmittelprodukte 3 im Übergabebereich 8 an die durch das Transportband 4 bewegte Schale 5.1 übergeben. In einem fünften Schritt 1500 umfasst das Verfahren 1000 das selektive Hemmen der Bewegung jeweils einer in den Beladebereich 9 bewegten Schale 5.1 durch in Kontakt bringen eines ersten Hemmmechanismus 11.1 und/oder eines zweiten Hemmmechanismus 11.2 einer Portioniereinheit 10 (vgl. FIG. 3 bis 5) mit der Schale 5.1. Das in Kontakt bringen des ersten Hemmmechanismus 11.1 und/oder des zweiten Hemmmechanismus 11.2 erfolgt dabei derart, dass die Bewegung der Schale 5.1 an mindestens einer Position P1 (vgl. FIG. 2) im Beladebereich 9 gehemmt wird.

Vorzugsweise umfasst das Verfahren 1000 in einem sechsten Schritt 1600 das Bewegen der im Beladebereich 9 durch den ersten Hemmmechanismus 11.1 und/oder den zweiten Hemmmechanismus 11.2 in der Bewegung gehemmten Schale 5.1, 5.2 nach dem Aufnehmen eines ersten Lebensmittelproduktes 3 entgegen der Transportrichtung T zum Aufnehmen eines auf dem ersten Lebensmittelprodukt 3 abgelegten zweiten Lebensmittelproduktes 3.

FIG. 7 zeigt dabei bevorzugte Teilschritte des fünften Schritts 1500 gemäß dem Verfahren 1000. Das selektive Hemmen der Bewegung jeweils einer in den Beladebereich 9 bewegten Schale 5.1 im fünften Verfahrensschritt 1500 umfasst dabei das Betreiben verschiedener Betriebsmodi.

In einem ersten Betriebsmodus in Schritt 1510 wird die Portioniereinheit 10 derart betrieben, dass der erste Hemmmechanismus 11.1 die Bewegung einer ersten Schale 5.1 an einer ersten Position P1 zum Aufnehmen eines ersten Lebensmittelproduktes hemmt, für den Fall, dass nur ein einziges Lebensmittelprodukt 3 in der Schale 5.1 zu portionieren ist.

In einem zweiten Betriebsmodus in Schritt 1520 wird die Portioniereinheit 10 derart betrieben, dass der erste Hemmmechanismus 11.1 die Bewegung einer ersten Schale 5.1 an einer ersten Position P1 zum Aufnehmen eines ersten Lebensmittelproduktes 3 hemmt und der zweite Hemmmechanismus 11.2 wird derart betrieben, dass dieser die Bewegung der ersten Schale 5.1 an einer zweiten Position P2 zum Aufnehmen eines zweiten Lebensmittelproduktes 3 hemmt. Die Portioniereinheit 10 wird für den Fall im zweiten Betriebsmodus gemäß Schritt 1520 betrieben, dass zwei Lebensmittelprodukte 3 in den Schalen 5.1, 5.2 zu portionieren sind.

Wird die Portioniereinheit 10 gemäß Schritt 1530 in einem dritten Betriebsmodus betrieben, so hemmt der erste Hemmmechanismus 11.1 in einer vordefinierten Anzahl von Takten die Bewegung einer ersten Schale 5.1 an einer Anzahl von Positionen (nicht gezeigt) zum Aufnehmen einer korrespondierenden Anzahl von Lebensmittelprodukten 3 und der zweite Hemmmechanismus 11.2 hemmt mit einer vordefinierten Anzahl von Takten die Bewegung einer zweiten Schale 5.2 an einer Anzahl von Positionen (nicht gezeigt) zum Aufnehmen einer korrespondierenden Anzahl von Lebensmittelprodukten 3. Der Betrieb im dritten Betriebsmodus erfolgt für den Fall, dass eine Anzahl von mehr als zwei Lebensmittelprodukten in den Schalen zu portionieren ist.

Gemäß Schritt 1540 kann die Portioniereinheit 10 in einem vierten Betriebsmodus betrieben werden, in dem der erste Hemmmechanismus 11.1 in einer vordefinierten Geschwindigkeit in Transportrichtung T bewegt wird, wobei die vordefinierte Geschwindigkeit langsamer als eine Transportgeschwindigkeit des Transportbandes 4 ist. Die Bewegung einer ersten Schale 5.1 wird dabei derart kontinuierlich gehemmt, dass eine Mehrzahl von Lebensmittelprodukten 3 in der ersten Schale 5.1 aufgenommen werden.
- 1: Beladeeinrichtung
- 2: Zuführband
- 3: Lebensmittelprodukt
- 4: Transportband
- 4.1: erster Bandabschnitt
- 4.2: zweiter Bandabschnitt
- 5.1: (erste) Schale
- 5.2: (zweite) Schale
- 5.3: (dritte) Schale
- 5.4: (vierte) Schale
- 6: Steuereinrichtung
- 7: Sensor
- 8: Übergabebereich
- 9: Beladebereich
- 10: Portioniereinheit
- 11: Hemmmechanismus
- 11.1: erster Hemmmechanismus
- 11.2: zweiter Hemmmechanismus
- 12: Antrieb
- 13: Motor
- 14: Getriebe, Zahnradantrieb
- 14.1: erstes Zahnrad
- 14.2: zweites Zahnrad
- 14.3: drittes Zahnrad
- 15.1: erste Gewindespindel
- 15.2: zweite Gewindespindel
- 16: Hubeinheit
- 16.1: erste Hubeinheit
- 16.2: zweite Hubeinheit
- 17: Stößel
- 18: Aktuator
- 19: Gewindemutter
- 21.1: Gleitführung
- 21.2: Gleitführung
- 22.1: Gleitbuchse
- 22.2: Gleitbuchse
- 23.1: Gleitstange
- 23.2: Gleitstange
- 24: Zuführeinrichtung
- 25: Zuführtransportband
- 1000: Verfahren
- 1100: Aufnehmen von Lebensmittelprodukten
- 1200: Transportieren der Lebensmittelprodukte
- 1300: Antreiben eines Transportbands
- 1400: Bewegen der Schalen
- 1500: selektives Hemmen der Bewegung der Schalen
- 1510: Betreiben in einem ersten Betriebsmodus
- 1520: Betreiben in einem zweiten Betriebsmodus
- 1530: Betreiben in einem dritten Betriebsmodus
- 1540: Betreiben in einem vierten Betriebsmodus
- 1600: Bewegen der Schale entgegen der Transportrichtung
- E: Transportebene
- T: Transportrichtung
- P1: erste Position
- P2: zweite Position

## Patentansprüche

1. Beladeeinrichtung (1) zum Portionieren von Lebensmittelprodukten (3) in Schalen (5.1, 5.2, 5.3, 5.4), mit
- einem Zuführband (2), welches zum Aufnehmen von Lebensmittelprodukten (3) und Transportieren der Lebensmittelprodukte (3) in einen Übergabebereich (8) eingerichtet ist,
- einem Transportband (4), welches zum Bewegen der Schalen (5.1, 5.2, 5.3, 5.4) in einer Transportrichtung (T) und zum Transportieren der Schalen (5.1, 5.2, 5.3, 5.4) in einen Beladebereich (9) unterhalb des Übergabebereichs (8) ausgebildet ist, wobei das Zuführband (2) zum Übergeben der Lebensmittelprodukte (3) im Übergabebereich (8) an die Schalen (5.1, 5.2, 5.3, 5.4) im Beladebereich (9) ausgebildet ist, und
- einer Portioniereinheit (10), die zum Portionieren der Lebensmittelprodukte (3) in den Schalen (5.1, 5.2, 5.3, 5.4) im Beladebereich (9) ausgebildet ist,
**dadurch gekennzeichnet, dass** die Portioniereinheit (10) einen ersten Hemmmechanismus (11.1) und einen zweiten Hemmmechanismus (11.2) aufweist, die dazu eingerichtet sind, zum sequenziellen in Kontakt kommen mit einer in den Beladebereich (9) bewegten Schale (5.1, 5.2, 5.3, 5.4) jeweils parallel zur Transportrichtung (T) und orthogonal zur Transportrichtung (T) angetrieben zu werden, derart, dass die Bewegung der Schale (5.1, 5.2, 5.3, 5.4) an mindestens einer Position (P1, P2) im Beladebereich (9) gehemmt wird.

2. Beladeeinrichtung (1) nach Anspruch 1,
wobei das Transportband (4) zum Transportieren der Schalen (5.1, 5.2, 5.3, 5.4) in einer Transportebene (E) eingerichtet ist, und die Portioniereinheit (10) unterhalb der Transportebene (E) angeordnet ist und der erste Hemmmechanismus (11.1) und der zweite Hemmmechanismus (11.2) dazu eingerichtet sind, zum selektiven Bewegen in die Transportebene (E) orthogonal zur Transportrichtung (T) angetrieben zu werden.

3. Beladeeinrichtung (1) nach einem der vorstehenden Ansprüche,
wobei die Portioniereinheit (10) mindestens einen Antrieb (12) aufweist, der zum Antreiben des ersten Hemmmechanismus (11.1) und/oder des zweiten Hemmmechanismus (11.2) parallel zur Transportrichtung (T) eingerichtet ist.

4. Beladeeinrichtung (1) nach Anspruch 3,
wobei der Antrieb (12) ein erster Antrieb (12) ist, der zum Antreiben des ersten Hemmmechanismus (11.1) eingerichtet ist, und die Portioniereinheit (10) einen zweiten Antrieb (12) aufweist, der zum Antreiben des zweiten Hemmmechanismus (11.2) parallel zur Transportrichtung (T) eingerichtet ist.

5. Beladeeinrichtung (1) nach einem der vorstehenden Ansprüche,
wobei der Antrieb (12) einen Motor (13) und ein mit dem Motor (13) kooperierendes stufenloses Getriebe (14) aufweist.

6. Beladeeinrichtung (1) nach Anspruch 5,
wobei das stufenlose Getriebe (14) mindestens einen der folgenden umfasst:
- einen mit dem Motor (13) kooperierenden Zahnradantrieb (14) zum Antreiben einer mit dem ersten Hemmmechanismus (11.1) und/oder dem zweiten Hemmmechanismus (11.2) wirkverbundenen Gewindespindel (15.1, 15.2), und
- einen mit dem ersten Hemmmechanismus (11.1) und/oder dem zweiten Hemmmechanismus (11.2) wirkverbundenen Zahnriemenantrieb.

7. Beladeeinrichtung (1) nach Anspruch 5 oder 6,
wobei die Gewindespindel eine erste Gewindespindel (15.1) ist und mit dem ersten Hemmmechanismus (11.1) in Eingriff ist und die Portioniereinheit (10) ferner eine zweite Gewindespindel (15.2) aufweist, die mit dem zweiten Hemmmechanismus (11.2) in Eingriff ist, wobei der Zahnradantrieb (14) dazu ausgebildet ist, die erste Gewindespindel (15.1) und die zweite Gewindespindel (15.2) gegenläufig anzutreiben.

8. Beladeeinrichtung (1) nach einem der vorstehenden Ansprüche,
wobei die Portioniereinheit (10) mindestens eine Hubeinheit (16, 16.1, 16.2) aufweist, die zum Antreiben des ersten Hemmmechanismus (11.1) und/oder des zweiten Hemmmechanismus (11.2) orthogonal zur Transportrichtung (T) eingerichtet ist.

9. Beladeeinrichtung (1) nach Anspruch 8,
wobei die Hubeinheit (16, 16.1, 16.2) einen Aktuator (18), insbesondere einen Pneumatik-Zylinder, aufweist und der erste Hemmmechanismus (11.1) und/oder der zweite Hemmmechanismus (11.2) ferner einen mit dem Aktuator (18) kooperierenden Stößel (17) aufweist, welcher durch den Aktuator (18) orthogonal zur Transportrichtung (T), insbesondere in die Transportebene (E) bewegbar ist.

10. Beladeeinrichtung (1) nach einem der vorstehenden Ansprüche, ferner umfassend:
- eine mit der Portioniereinheit (10) steuerungstechnisch verbundene Steuereinrichtung (6), die dazu eingerichtet ist, die Bewegung des ersten Hemmmechanismus (11.1) und des zweiten Hemmmechanismus (11.2) parallel zur Transportrichtung (T) und/oder orthogonal zur Transportrichtung (T) zu steuern.

11. Beladeeinrichtung (1) nach Anspruch 10, ferner umfassend:
- mindestens einen mit der Steuereinrichtung (6) verbundenen Sensor (7), der zum Erfassen einer sich in den Beladebereich (9) bewegenden Schale (5.1, 5.2, 5.3, 5.4) eingerichtet ist.

12. Beladeeinrichtung (1) nach Anspruch 11,
wobei der Sensor (7) zum Erfassen der sich in den Beladebereich (9) bewegenden Schale (5.1, 5.2, 5.3, 5.4) durch Detektieren eines Abstands zwischen zwei benachbarten Schalen (5.1, 5.2, 5.3, 5.4) im Beladebereich (9) eingerichtet ist.

13. Beladeeinrichtung (1) nach Anspruch 10, 11 oder 12,
wobei die Steuereinrichtung (6) dazu ausgebildet ist, den ersten Hemmmechanismus (11.1) und den zweiten Hemmmechanismus (11.2) abhängig von der Anzahl der zu portionierenden Lebensmittelprodukte (3) in einem, mehreren oder sämtlichen der folgenden Betriebsmodi zu betreiben:
in einem ersten Betriebsmodus, in dem der erste Hemmmechanismus (11.1) die Bewegung der in den Beladebereich (9) bewegten Schale (5.1, 5.2, 5.3, 5.4) an einer ersten Position (P1) zum Aufnehmen eines Lebensmittelproduktes (3) hemmt und/oder unterbricht, für den Fall, dass ein Lebensmittelprodukt (3) in der Schale (5.1, 5.2, 5.3, 5.4) zu portionieren ist,
in einem zweiten Betriebsmodus, in dem der erste Hemmmechanismus (11.1) die Bewegung der in den Beladebereich (9) bewegten Schale (5.1, 5.2, 5.3, 5.4) an einer ersten Position (P1) zum Aufnehmen eines ersten Lebensmittelproduktes (3) und der zweite Hemmmechanismus (11.2) die Bewegung der Schale (5.1, 5.2, 5.3, 5.4) an einer zweiten Position (P2) zum Aufnehmen eines zweiten Lebensmittelproduktes (3) hemmt und/oder unterbricht, für den Fall, dass zwei Lebensmittelprodukte (3) in der Schale (5.1, 5.2, 5.3, 5.4) zu portionieren sind,
in einem dritten Betriebsmodus, in dem der erste Hemmmechanismus (11.1) in einer vordefinierten Anzahl von Takten die Bewegung einer ersten Schale (5.1) an einer Anzahl von Positionen (P1, P2) zum Aufnehmen einer korrespondierenden Anzahl von Lebensmittelprodukten (3) hemmt und/oder unterbricht und der zweite Hemmmechanismus (11.2) in einer vordefinierten Anzahl von Takten die Bewegung einer zweiten Schale (5.2) an einer Anzahl von Position (P1, P2) zum Aufnehmen einer korrespondierenden Anzahl von Lebensmittelprodukten (3) hemmt und/oder unterbricht, für den Fall, dass eine Mehrzahl von Lebensmittelprodukten (3) in der ersten Schale (5.1) und der zweiten Schale (5.2) zu portionieren ist,
in einem vierten Betriebsmodus, in dem der erste Hemmmechanismus (11.1) in einer vordefinierten Geschwindigkeit in Transportrichtung (T) bewegt wird, die langsamer ist als eine Transportgeschwindigkeit des Transportbandes (4) ist, und die Bewegung der in den Beladebereich (9) bewegten Schale (5.1, 5.2, 5.3, 5.4) kontinuierlich hemmt, derart, dass eine Mehrzahl von Lebensmittelprodukten (3) in der Schale (5.1, 5.2, 5.3, 5.4) aufgenommen wird.

14. Portioniereinheit (10) für eine Beladeeinrichtung (1) zum Portionieren von Lebensmittelprodukten (3) in Schalen (5.1, 5.2, 5.3, 5.4),
wobei die Portioniereinheit (10) zum Portionieren der Lebensmittelprodukte (3) in Schalen (5.1, 5.2, 5.3, 5.4) in einem Beladebereich (9) ausgebildet ist,
**dadurch gekennzeichnet, dass** die Portioniereinheit (10) einen ersten Hemmmechanismus (11.1) und einen zweiten Hemmmechanismus (11.2) aufweist, die dazu eingerichtet sind, zum sequenziellen in Kontakt kommen mit einer in den Beladebereich (9) bewegten Schale (5.1, 5.2, 5.3, 5.4) jeweils parallel zur Transportrichtung (T) und orthogonal zur Transportrichtung (T) angetrieben zu werden, derart, dass die Bewegung der Schale (5.1, 5.2, 5.3, 5.4) an mindestens einer Position (P1, P2) im Beladebereich (9) gehemmt wird.

15. Verfahren zum Betreiben einer Beladeeinrichtung (1) zum Portionieren von Lebensmittelprodukten (3) in Schalen (5.1, 5.2, 5.3, 5.4), insbesondere einer Beladeeinrichtung (1) nach einem der Ansprüche 1 bis 13, umfassend die Schritte:
- Aufnehmen von Lebensmittelprodukten (3) auf einem Zuführband (2);
- Transportieren der Lebensmittelprodukte (3) in einen Übergabebereich (8);
- Antreiben eines Transportbands (4) in einer Transportrichtung (T) zum Aufnehmen von Schalen (5.1, 5.2, 5.3, 5.4);
- Bewegen der Schalen (5.1, 5.2, 5.3, 5.4) in einen Beladebereich (9) durch das Transportband (4), der unterhalb des Übergabebereichs (8) angeordnet ist, wobei die Lebensmittelprodukte (3) im Übergabebereich (8) an die durch das Transportband (4) transportierten Schalen (5.1, 5.2, 5.3, 5.4) übergeben werden; und
- selektives Hemmen der Bewegung jeweils einer in den Beladebereich (9) bewegten Schale (5.1, 5.2, 5.3, 5.4) durch in Kontakt bringen eines ersten Hemmmechanismus (11.1) und/oder eines zweiten Hemmmechanismus (11.2) einer Portioniereinheit (10) mit der Schale (5.1, 5.2, 5.3, 5.4), derart, dass die Bewegung der Schale (5.1, 5.2, 5.3, 5.4) an mindestens einer zweiten Position (P2) im Beladebereich (9) gehemmt wird, wobei der erste Hemmmechanismus (11.1) und der zweite Hemmmechanismus (11.2) jeweils parallel zur Transportrichtung (T) und orthogonal zur Transportrichtung (T) antreibbar sind, wobei die Schale (5.1, 5.2, 5.3, 5.4) beim Unterbrechen der Bewegung ein Lebensmittelprodukt (3) aufnimmt.

16. Verfahren nach Anspruch 15, wobei das selektive Hemmen der Bewegung jeweils einer in den Beladebereich (9) bewegten Schale (5.1, 5.2, 5.3, 5.4) umfasst:
- Betreiben des ersten Hemmmechanismus (11.1) und des zweiten Hemmmechanismus (11.2) abhängig von der Anzahl der zu portionierenden Lebensmittelprodukte (3) in einem, mehreren oder sämtlichen der folgenden Betriebsmodi:
in einem ersten Betriebsmodus, in dem der erste Hemmmechanismus (11.1) die Bewegung der in den Beladebereich (9) bewegten Schale (5.1, 5.2, 5.3, 5.4) an einer ersten Position (P1) zum Aufnehmen eines Lebensmittelproduktes (3) hemmt und/oder unterbricht, für den Fall, dass ein Lebensmittelprodukt (3) in der Schale (5.1, 5.2, 5.3, 5.4) zu portionieren ist,
in einem zweiten Betriebsmodus, in dem der erste Hemmmechanismus (11.1) die Bewegung der in den Beladebereich (9) bewegten Schale (5.1, 5.2, 5.3, 5.4) an einer ersten Position (P1) zum Aufnehmen eines ersten Lebensmittelproduktes (3) und der zweite Hemmmechanismus (11.2) die Bewegung der Schale (5.1, 5.2, 5.3, 5.4) an einer zweiten Position (P2) zum Aufnehmen eines zweiten Lebensmittelproduktes (3) hemmt und/oder unterbricht, für den Fall, dass zwei Lebensmittelprodukte (3) in der Schale (5.1, 5.2, 5.3, 5.4) zu portionieren sind,
in einem dritten Betriebsmodus, in dem der erste Hemmmechanismus (11.1) in einer vordefinierten Anzahl von Takten die Bewegung einer ersten Schale (5.1) an einer Anzahl von Positionen (P1, P2) zum Aufnehmen einer korrespondierenden Anzahl von Lebensmittelprodukten (3) hemmt und/oder unterbricht und der zweite Hemmmechanismus (11.2) in einer vordefinierten Anzahl von Takten die Bewegung einer zweiten Schale (5.2) an einer Anzahl von Position (P1, P2) zum Aufnehmen einer korrespondierenden Anzahl von Lebensmittelprodukten (3) hemmt und/oder unterbricht, für den Fall, dass eine Mehrzahl von Lebensmittelprodukten (3) in der ersten Schale (5.1) und der zweiten Schale (5.2) zu portionieren ist,
in einem vierten Betriebsmodus, in dem der erste Hemmmechanismus (11.1) in einer vordefinierten Geschwindigkeit in Transportrichtung (T) bewegt wird, die langsamer ist als eine Transportgeschwindigkeit des Transportbandes (4) ist, und die Bewegung der in den Beladebereich (9) bewegten Schale (5.1, 5.2, 5.3, 5.4) kontinuierlich hemmt, derart, dass eine Mehrzahl von Lebensmittelprodukten (3) in der Schale (5.1, 5.2, 5.3, 5.4) aufgenommen wird.

17. Verfahren nach Anspruch 15 oder 16, ferner umfassend:
- Bewegen (1600) der im Beladebereich (9) durch den ersten Hemmmechanismus (11.1) und/oder den zweiten Hemmmechanismus (11.2) in der Bewegung gehemmten Schale (5.1, 5.2, 5.3, 5.4) nach dem Aufnehmen eines ersten Lebensmittelproduktes (3) entgegen der Transportrichtung (T) zum Aufnehmen eines zumindest abschnittsweise auf dem ersten Lebensmittelprodukt (3) abgelegten zweiten Lebensmittelproduktes (3).
